# FASCICULE DE BREVET EUROPEEN

(11) **EP 3 311 051 B1**
(45) Date de publication et mention de la délivrance du brevet: **04.12.2019**
(21) Numéro de dépôt: 16732537.2
(22) Date de dépôt: 13.06.2016
(51) Int. Cl.: F16K 31/60, E03C 1/04, F16K 21/06

(54) **ROBINET TEMPORISÉ À FAIBLE ENCOMBREMENT**
KOMPAKTE GETAKTETE ARMATUR
COMPACT TIMED FAUCET

(30) Priorité: 17.06.2015 FR 1501266
(43) Date de publication de la demande: 25.04.2018
(73) Titulaire: Les Robinets Presto, 92120 Montrouge (FR)
(72) Inventeur: BIJU-DUVAL, Rémi, 17110 Saint Georges de Didonne (FR)
(74) Mandataire: Eidelsberg, Olivier Nathan
(86) Numéro de dépôt international: PCT/EP2016/063529
(87) Numéro de publication internationale: WO 2016/202752

(56) Documents cités:
- WO-A1-01/33121
- US-A- 2 738 946
- US-A- 4 134 570
- US-A1- 2001 025 939
- US-A1- 2006 130 916

## Description

La présente invention se rapporte à un robinet dit temporisé, notamment pour lavabo ou douche, en particulier pour des lieux publics ou collectivités, à grande fréquence d'utilisation.

Classiquement, un robinet temporisé pour lavabo est constitué d'un corps de robinet, notamment de forme cylindrique circulaire, comportant un orifice d'arrivée d'eau et un orifice de sortie d'eau, des moyens formant circuit d'eau entre les orifices d'arrivée et de sortie, et une vanne temporisée disposée dans le circuit d'eau et commandée par des moyens de commande d'ouverture, notamment manuels, et l'agencement étant tel que l'actionnement manuel des moyens de commande d'ouverture entraîne la délivrance d'eau à l'orifice de sortie pendant un intervalle de temps fini déterminé à l'avance.

Dans des robinets temporisés de l'art antérieur, les moyens de commande sont constitués d'un bouton poussoir disposé au sommet du corps de robinet. Ces dispositifs à commande par bouton poussoir sont difficiles à actionner, nécessitant une force importante de poussée de la part de l'utilisateur, que souvent n'ont pas les enfants en bas âge, les personnes âgées et/ou les personnes handicapées.

Dans d'autres robinets, le bouton poussoir est remplacé par une longue tige montée pivotante suivant un point pivot au dessus du corps de robinet. La force nécessitée pour actionner le robinet y est alors bien moins grande. Cependant, ces robinets sont dangereux d'utilisation, notamment lorsque l'utilisateur se penche pour y boire « au robinet » risquant de prendre la tige rotule dans l'œil.

On connaît également de US2001/0025939A1, un robinet en deux parties, comportant un robinet de base auquel est adjoint une cartouche permettant de lui adjoindre une fonction de temporisation. Ce robinet de l'art antérieur comporte aussi une longue tige qui fait saillie du robinet et est dangereuse. En outre, il est de structure compliquée.

La présente invention vise à surmonter les inconvénients de l'art antérieur en proposant un dispositif formant robinet temporisé, notamment pour lavabo, en particulier pour des lieux publics ou collectivités, à grande fréquence d'utilisation, qui nécessite une moindre force de l'utilisateur pour son actionnement tout en présentant un faible risque de blessure lors de l'utilisation, similaire ou identique au risque existant pour un dispositif à bouton poussoir.

Suivant l'invention, un dispositif formant robinet temporisé est tel que défini à la revendication 1, des perfectionnements et modes de réalisation avantageux étant définis aux sous revendications

En décalant ainsi, par rapport à l'art antérieur, la tige montée rotative vers le bas par rapport au sommet du corps du robinet, et la cartouche de temporisation, on conserve un effet de levier suffisant au développement d'une force suffisante pour l'actionnement du robinet par un utilisateur même fortement diminué tout en limitant le dépassement de la manette au delà du sommet du corps, pour éviter qu'un utilisateur ne se cogne malencontreusement sur la manette. En outre, le robinet est de structure simple et compacte.

De préférence, la manette comporte au moins une branche longitudinale dont une extrémité inférieure est fixée à l'axe et qui, en position de repos des moyens de commande, s'étend sensiblement parallèlement à l'axe longitudinal du corps de robinet.

De préférence, une barrette transversale fait saillie latéralement de l'extrémité de la au moins une branche longitudinale à distance de l'axe, la barrette transversale s'étendant, en position de repos des moyens de commande, au dessus du sommet du corps de robinet, notamment parallèlement à l'axe.

De préférence, la distance entre la barrette transversale et la surface de sommet du corps de robinet est sensiblement nulle, mais cependant juste suffisante pour permettre, lors de la rotation de la manette dans un sens et dans l'autre, à la barrette transversale de passer au delà de la périphérie de la surface supérieure du corps de robinet.

De préférence, la surface supérieure du corps de robinet comporte une zone avant inclinée vers le bas et une zone arrière inclinée vers le bas, pour ainsi permettre la rotation de la barrette transversale sans qu'elle ne tape contre ladite surface supérieure.

De préférence, il est prévu deux branches longitudinales diamétralement opposées, la barrette transversale s'étendant d'une branche longitudinale à l'autre, et l'axe étant fixé à chaque extrémité à une branche longitudinale respective.

De préférence, la section transversale de l'axe est de forme non circulaire, notamment carrée, et l'axe est solidaire en rotation d'un élément formant plaque, notamment en étant reçu dans un élément tubulaire de section non circulaire, notamment carrée, complémentaire issu de la plaque, la rotation de la manette entraînant la rotation de la plaque, qui pousse alors vers le bas un bouton poussoir qui pousse l'obturateur de la vanne temporisée hors de son siège.

De préférence, l'élément formant plaque comporte une came, l'agencement étant tel que lors de la rotation de la manette, la came pivote jusqu'à buter contre la paroi intérieure du robinet ou contre des moyens de butée issus de la paroi intérieure du corps de robinet, dans un sens et dans l'autre.

Avec ce mode de réalisation préférentiel de l'invention, on obtient la possibilité d'obtenir très facilement que les courses de la came dans un sens et dans l'autre soient différentes l'une de l'autre, ce qui a pour effet de bloquer les courses correspondantes de la plaque et donc du bouton poussoir intérieur à deux valeurs différentes, créant ainsi deux temporisation différentes pour les deux sens de rotation de la manette.

La présente invention se rapporte aussi à un assemblage formant lavabo, comportant un robinet suivant l'invention et une vasque de lavabo, le robinet étant agencé de manière que l'orifice de sortie se trouve au dessus de la vasque, en étant à distance suffisante pour permettre à l'utilisateur d'y positionner les mains pour pouvoir les mouiller.

La présente invention se rapporte aussi à un assemblage formant douche, comportant un robinet suivant l'invention et une zone de réception et d'évacuation de l'eau, le robinet étant agencé de manière que l'orifice de sortie se trouve au dessus de la zone de réception, en étant à distance suffisante pour permettre à l'utilisateur de s'y placer pour se mouiller le corps.

A titre d'exemple, on décrit maintenant un mode de réalisation préféré de l'invention en se reportant aux dessins dans lesquels :
la figure 1 est une vue en perspective d'un robinet suivant l'invention suivant une version mitigeur monté sur la plage d'un lavabo ;
- la figure 2 est une vue d'un dispositif formant robinet en version simple monté également sur une plage d'un lavabo ;
- la figure 3 est une vue en perspective de la partie supérieure des robinets des figures 1 et 2 suivant une vue éclatée ;
- la figure 4 est une vue en perspective éclatée des différents éléments du robinet des figures 1 et 2 en partie supérieure ;
- la figure 5 est une vue en perspective partiellement éclatée de la cartouche temporisée disposée en partie inférieure dans le corps du robinet ;
- les figures 6A, 6B et 6C sont des vues en perspective du capot des dispositifs des figures 1 et 2, suivant des agencements différents, les agencements se différenciant par le positionnement de butées A et B, ces positionnements faisant que les durées de temporisation varient d'une figures à l'autre;
- la figure 7 est une vue en coupe longitudinale du robinet des figures 1 et 2 ;
- la figure 8 est une vue en coupe suivant la ligne A-A de la figure 3 ;
- la figure 9 est une vue en perspective partiellement éclatée de la cartouche temporisée formant la vanne des modes de réalisation des figures 1 ou 2 ;
- les figures 10a, 10b et 10c représentent les différentes positions de la manette, à savoir une position de repos à la figure 10a, une position d'actionnement dans une direction qui s'éloigne de l'utilisateur à la figure 10b et une position d'actionnement vers l'utilisateur à la figure 10c.

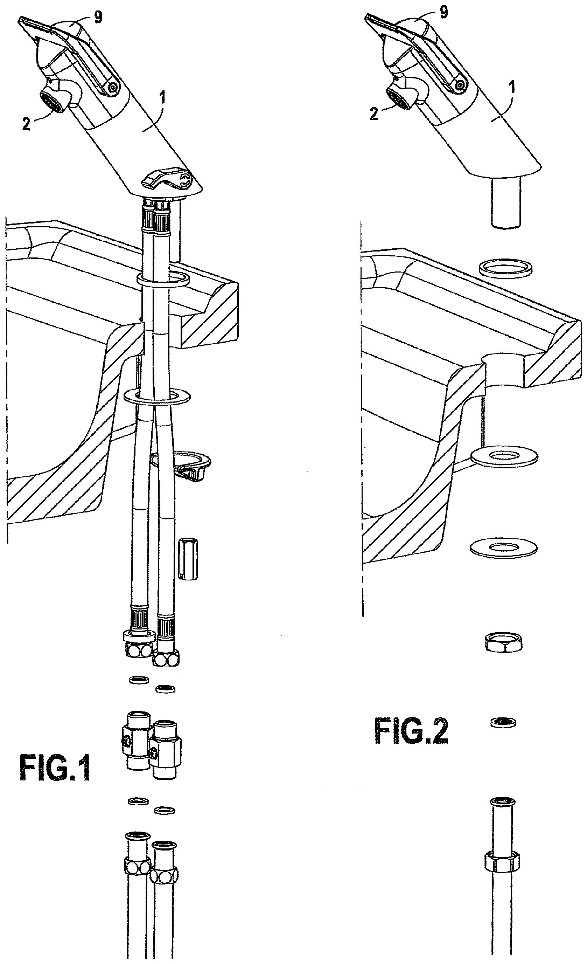

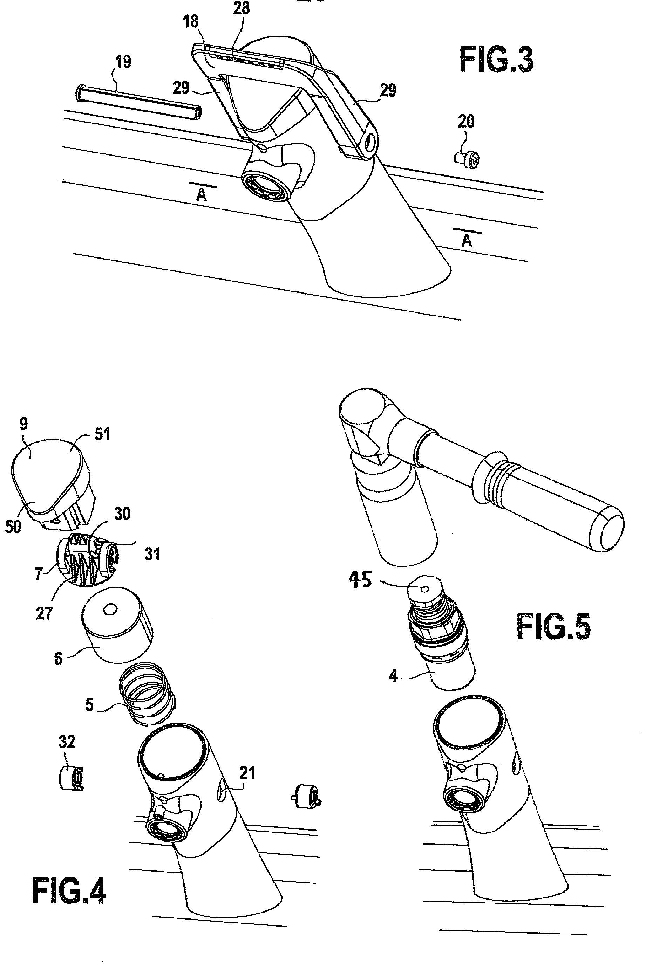

Aux dessins, il est représenté deux versions d'un robinet temporisé suivant l'invention montées sur la plaque d'un lavabo. La figure 1 représente une version à mitigeur comportant deux conduits passant par l'orifice d'entrée, à savoir un conduit d'eau chaude et un conduit d'eau froide, et un orifice de sortie d'eau mitigée et la figure 2 représente une version plus simple dans laquelle un seul conduit pénètre par l'orifice d'entrée pour une sortie d'eau par l'orifice de sortie. Le corps du robinet de ces deux modes de réalisation est identique et les figures 3 à 8 suivantes s'appliquent de la même manière à ces deux versions.

L'agencement dans un lavabo, de même que dans une douche, est tel que l'orifice de sortie se trouve au dessus d'une zone de réception et d'évacuation de l'eau, par exemple un bassin ou une cuvette, en étant à distance suffisante de cette zone de réception d'eau pour permettre à l'utilisateur d'y positionner une partie de son corps, par exemple les mains dans le cas du lavabo, ou, dans le cas de la douche, la quasi totalité de son corps, pour que l'eau puisse venir mouiller la partie du corps ou le corps interposé.

Le robinet est constitué d'un corps 1 principal sensiblement de forme cylindrique circulaire oblongue destiné à être monté sur la plage du lavabo (voir les figures 1 et 2). Le montage et la fixation sur le lavabo des robinets des figures 1 et 2 s'effectuent de manière classique et connue par l'intermédiaire de vis, écrous et rondelles et ne sont pas décrits plus en détail dans la présente demande.

Le corps 1 du robinet est coiffé sur sa partie supérieure d'un capot 9 supérieur qui vient fermer l'extrémité supérieure du corps 1 de robinet. En outre, le corps 1 comporte un orifice 2 de sortie d'eau qui débouche de la surface latérale du corps 1, de préférence en partie haute, et un orifice 3 d'entrée d'eau débouchant à l'opposé du capot 9, en face de la plage du lavabo.

Suivant le mode de réalisation des figures 1 ou 2, pénètrent dans le corps 1 par l'intermédiaire de l'orifice 3 d'entrée dans le corps 1 un ou deux conduits. Dans le cas de deux conduits (figure 1), il y a un conduit d'eau chaude et un conduit d'eau froide. Dans ce cas, il est prévu à l'intérieur du corps 1 du robinet un mitigeur destiné à assurer le mélange des eaux chaude et froide avant leur sortie par l'orifice 2.

A l'intérieur du corps 1 du robinet sont disposés en succession du bas vers le haut (c'est à dire de l'orifice 3 d'entrée vers le capot 9) une cartouche 4 temporisée (représenté à la figure 5), un ressort 5 hélicoïdal, un bouton poussoir 6, une rotule 7 et le capot 9.

La cartouche 4 temporisée est une cartouche classique qui comporte une chambre 41 de temporisation dans laquelle peut se déplacer un obturateur 42 sous l'action d'un piston 43 ayant une tête 44 sur laquelle vient agir le bouton poussoir 6.

Ainsi, lorsqu'il est exercé une pression sur le bouton poussoir 6, celui appuie sur la tête 44 du piston 43 pour pousser l'obturateur 42 hors de son siège 48 et à l'intérieur de la chambre 41 de temporisation, chassant ainsi l'eau qui s'y trouve par les découpes 49 périphériques de l'obturateur 42, le siège 48 et les fenêtres 46 ouvertes par la sortie de l'obturateur hors du siège. Les fenêtres 46 ayant été ouvertes par la sortie de l'obturateur 42 de son siège 48, cela a aussi pour effet d'ouvrir la communication pour l'eau entre l'orifice 3 d'entrée et l'orifice 2 de sortie, pour ainsi assurer une délivrance d'eau à l'utilisateur.

Un petite partie du débit d'eau principal passe par un trou 45 calibré traversant le piston et l'obturateur pour ainsi venir remplir la chambre de temporisation. Le remplissage de la chambre repousse petit à petit l'obturateur 42 dans son siège 48 et vient refermer les fenêtres 46 pour ainsi couper la communication pour l'eau entre l'orifice 3 d'entrée et l'orifice 2 de sortie. On choisit la dimension du trou calibré pour déterminer le temps que met l'obturateur à revenir dans son siège pour ainsi réaliser la temporisation.

Le capot 9 comporte une partie 10 supérieure de tête sensiblement circulaire et une partie 11 inférieure tubulaire de diamètre plus petit de manière à pouvoir pénétrer à l'intérieur du corps 1 tandis que la partie 10 de tête vient buter sur le bord supérieur du corps 1 pour y être fixée, par exemple par vissage ou par encliquetage.

Une manette 18 est montée pivotante par rapport au corps 1 du robinet par rapport à un axe 19 de section carrée s'étendant de part et d'autre du corps 1 de robinet dans une direction horizontale sensiblement perpendiculaire à l'axe de délivrance de l'eau par l'orifice de sortie. La manette 18 est en forme de U en ayant une barrette 28 transversale horizontale parallèle à l'axe 19, qui à la figure 3 s'étend au-dessus de la surface supérieure du capot 9 du corps 1 de robinet, et deux branches 29 latérales longitudinales gauche et droite, qui s'étendent le long de la surface latérale du corps 1 de robinet à l'extérieur de ce dernier. L'axe 19 de section carrée est fixé solidaire en rotation aux extrémités inférieures des deux branches latérales de la manette dans des paliers 32 respectifs formés dans les branches 29, une vis 20 assurant la fixation de l'axe 19 et des branches latérales de la manette 18.

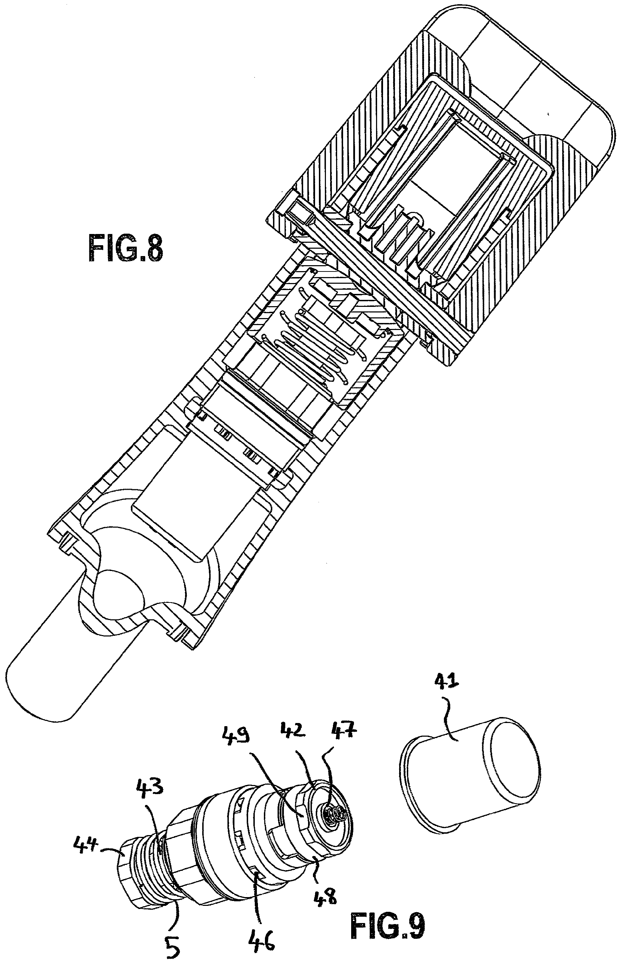

En position de repos ou neutre des moyens de commande, les branches s'étendent sensiblement parallèlement à l'axe longitudinal du corps de robinet et la barrette transversale s'étend au dessus du sommet du corps de robinet. La distance entre la barrette transversale et la surface de sommet du capot 9 est sensiblement nulle, mais cependant juste suffisante pour permettre, lors de la rotation de la manette dans un sens et dans l'autre, à la barrette transversale de passer au delà de la périphérie de la surface supérieure du capot, pour atteindre les positions extrêmes représentées aux figures 9b et 9c. la surface supérieure du capot 9 comporte une zone 50 avant inclinée vers le bas et une zone 51 arrière inclinée vers le bas, pour faciliter la rotation de la barrette transversale sans qu'elle ne tape contre ladite surface supérieure tout en conservant une distance entre la barrette et la surface supérieure du capot 9 aussi petite que possible.

L'axe 19 est également rendu solidaire en rotation de la rotule 7. La rotule 7 comporte une partie inférieure formant plaque de base 27, qui vient presser contre la face supérieure de l'élément 6 cylindrique formant bouton poussoir intérieur destiné à presser la tige de l'obturateur de la cartouche 4 temporisée. La rotule 7 comporte à la surface supérieure de la plaque 27 de base une partie 31 tubulaire de section carrée complémentaire de la section carrée de l'axe 19 et dans laquelle passe l'axe 19 sensiblement à complémentarité de forme pour assurer la solidarité en rotation de l'axe 19 et de la rotule 7. Au dessus de la partie 31 tubulaire de réception de l'axe 19, fait saillie une partie 30 formant came, de forme sensiblement parallélépipédique rectangle.

La rotule 7, l'axe 19 et la manette 18 sont ainsi solidaires en rotation, tandis que l'axe 19 peut pivoter par rapport au corps 1 dans les paliers 32 montés dans les trous 21 formés dans la surface latérales du corps 1. Ainsi, lorsque l'utilisateur presse vers lui, c'est-à-dire vers la gauche à la figure 3, la manette 18 extérieure, notamment sa barrette 28 transversale de base, il fait également pivoter vers lui à l'intérieur du corps 1 la came 30 et la plaque 27. La plaque 27 applique alors une pression vers le bas sur le bouton poussoir 6. Cette pression sur le bouton poussoir 6 a pour conséquence le déplacement vers le bas d'un plongeur de la cartouche 4 temporisée, ce qui va pousser l'obturateur de la vanne hors de son siège d'une certaine distance. La vanne est alors ouverte, et dès relâchement de la manette, l'eau peut passer par la vanne entre l'orifice d'entrée et l'orifice de sortie d'eau. Dans le même temps, une partie du débit d'eau, par une ouverture 45 calibrée en conséquence, pénètre dans la chambre 41 de temporisation de la cartouche temporisée et vient, au fur à mesure du remplissage de la chambre 41, repousser l'obturateur 42 dans son siège 48, le calibrage étant réalisé pour que ce retour de l'obturateur par la poussée de l'eau remplissant la chambre de temporisation prenne un temps déterminé à l'avance, dit intervalle de temps de temporisation, par exemple 15 secondes.

Le temps que met l'obturateur à revenir dans son siège est fonction de la distance de sa course initiale s'éloignant du siège. Plus le bouton 6 poussoir a été appuyé fortement, plus la durée est grande, et ce jusqu'à une valeur maximale correspondant au moment où la came 30 vient buter contre une rainure 40 avant ou 41 arrière formée dans la paroi intérieure de l'embout 11 et ayant une complémentarité de forme avec la came 30.

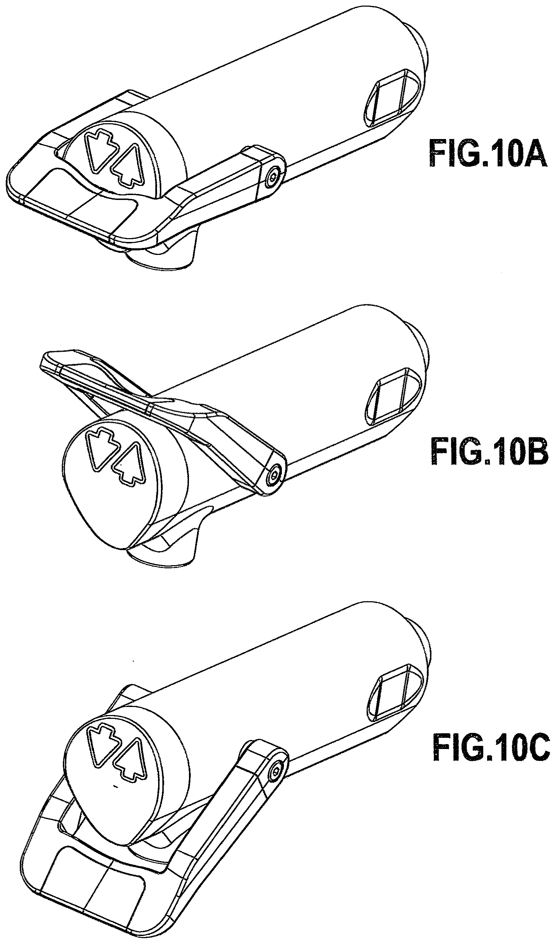

Une fois que l'utilisateur a relâché la manette, le ressort 5 renvoie le bouton 6 vers le haut et la manette est de nouveau dans la position représentée à la figure 3 ou à la figure 10A.

La temporisation est donc fonction de la course angulaire de poussée de la plaque 27 contre le bouton poussoir 6 lors de l'actionnement de la manette. Plus le bouton poussoir 6 a été enfoncé loin, plus la chambre de temporisation a été vidée et plus longue est la temporisation pendant laquelle l'eau va s'écouler avant que ne soit à nouveau remplie la chambre de temporisation de la cartouche 4 de temporisation.

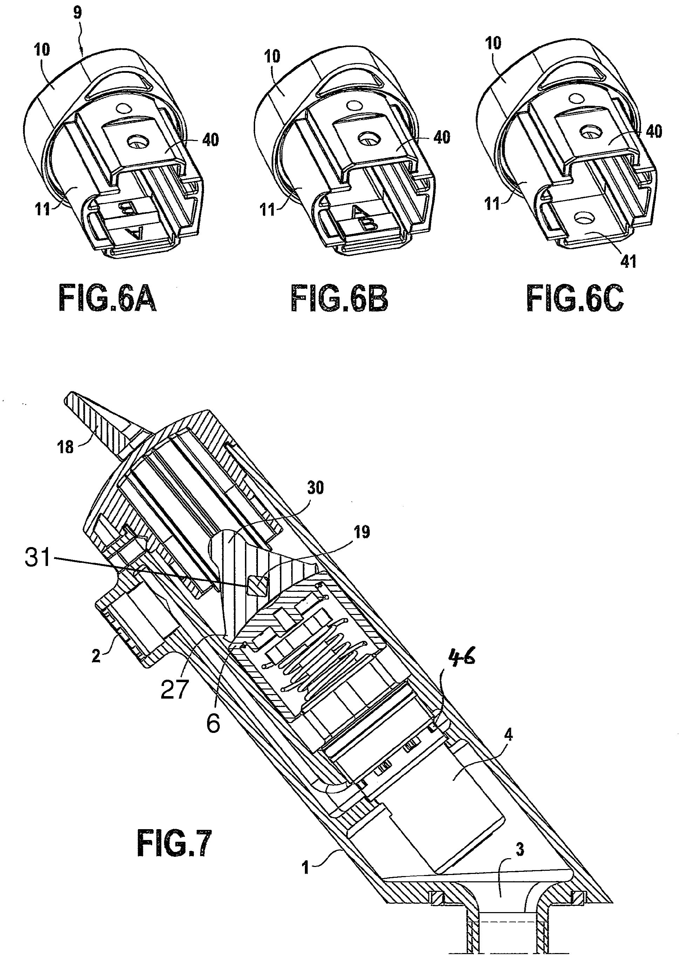

L'agencement est réalisé de sorte que la course de la came 30 lors de la rotation de la manette n'est pas limitée de la même manière suivant que l'on actionne la manette 18 vers le bas (figure 10C) ou vers le haut (figure 10B) à la figure 3, c'est à dire notamment suivant que l'utilisateur utilisant le lavabo rapproche la manette vers lui ou l'éloigne. Pour ce faire, on insère à l'intérieur des rainures 40 et 41 formées dans l'embout et dans lesquelles est destinée à venir s'introduire la came 30 lors de la rotation de la rotule 7 des cales A et B représentées aux figures 6A et 6B, qui ont pour effet de bloquer à des moments différents de sa course la came 30. Ainsi, comme représenté à la figure 6A, lorsque les deux cales A et B sont fixées comme indiqué à la figure 6A, on obtient une temporisation de 7 secondes. Si on veut obtenir une temporisation de 11 secondes, on fixe les cales comme représenté à la figure 6B. A l'inverse, comme représenté à la figure 6C, si on ne dispose aucune cale dans les rainures, on obtient la temporisation précédemment mentionnée de quinze secondes, identique pour les deux sens d'actionnement de la manette.

Dans le mode de réalisation de la figure 6A, on a, lorsque l'on tire la manette vers soi, une temporisation de sept secondes et une temporisation de quinze secondes, lorsque l'on repousse la manette dans le sens opposé. A la figure 6B, une temporisation de 11 secondes, lorsque l'on tire la manette vers soi, et une temporisation de 15 secondes lorsqu'on la repousse dans le sens opposé, tandis qu'à la figure 6C, on a une temporisation symétrique de 15 secondes dans les deux sens. On peut également prévoir un mode de réalisation dans lequel on prévoit vers soi une temporisation de sept secondes avec le positionnement des cales comme représenté à la figure 6A, dans la rainure 41, tandis que les cales A et B fixées dans la rainure 40 sont disposées, comme représenté à la figure 6B, ce qui donne alors une temporisation de 7 et 11 secondes respectivement suivant la rotation choisie pour la manette 18.

Ainsi, pour se laver les mains par exemple, un utilisateur agit de la manière suivante. Il actionne la manette 18 vers lui pour avoir une temporisation de sept secondes pendant laquelle il a le temps de se mouiller les mains. Une fois la manette revenue et l'eau ayant cessé de couler, il peut, par exemple après s'être enduit les mains de savon, de nouveau actionner la manette s'il le souhaite, vers soi de nouveau, pour une temporisation de 7 secondes, mais plus préférablement dans l'autre sens pour une temporisation supérieure qui peut être par exemple de 11 ou de 15 secondes, pour lui permettre de se rincer les mains après s'être enduit de savon. Bien évidemment, on peut également inverser les temporisations (le court débit lorsque l'on éloigne la manette et le long débit lorsqu'on rapproche la manette). On a ainsi le choix à tout moment entre deux quantités d'écoulement d'eau et ce dès la fin d'un écoulement d'une quantité ou de l'autre. Il peut ainsi adapter la quantité d'eau délivrée à ses besoins, ce qui permet d'assurer une certaine économie d'eau très utile, notamment pour des robinets pour collectivités, application classique pour des robinets mitigeur temporisés de ce genre. En particulier, dans l'art antérieur, il est classique que lors de la première étape de mouillage l'utilisateur n'utilise pas la totalité de l'eau qu lui est délivrée. Suivant l'invention, on diminue ainsi la quantité d'eau qui va s'écouler ainsi de manière inutile.

La description ci-dessus est réalisée sur la base d'un mode de réalisation dans lequel la manette est déplacée vers soi ou à l'opposé. On peut également prévoir des déplacements vers la droite et vers la gauche ou vers le bas ou vers le haut, ou tous autres déplacements analogues.

Aux dessins, il a été représenté des modes de réalisation de robinets de lavabo sur vasque. Bien évidemment, l'invention peut s'appliquer également à des robinets de lavabo en version murale. On peut également l'appliquer à des installations de douches.

## Revendications

1. Robinet temporisé, constitué d'un corps (1) de robinet, comportant un orifice (3) d'arrivée d'eau, notamment en partie basse, et un orifice (2) de sortie d'eau, notamment en partie haute, des moyens formant circuit d'eau entre les orifices d'arrivée et de sortie, et des moyens formant vanne (4) temporisée disposés dans le circuit d'eau et commandés par des moyens de commande d'ouverture, l'actionnement par un utilisateur des moyens de commande d'ouverture entraînant la délivrance d'eau pendant un intervalle de temps fini, les moyens de commande comportant une manette (18) montée rotative par rapport au corps de robinet par rapport à un axe (19) transversal, notamment horizontal, l'axe transversal étant disposé décalé vers le bas par rapport au sommet (50, 51) du corps de robinet, les moyens (4) formant vanne temporisée étant disposés en dessous de l'axe (19) transversal, **caractérisé en ce que** l'axe (19) transversal se trouve entre l'orifice (2) de sortie et l'orifice (3) d'arrivée d'eau.

2. Robinet suivant la revendication 1, **caractérisé en ce que**, l'axe (19) transversal est en dessous de l'orifice (2) de sortie d'eau du robinet.

3. Robinet suivant la revendication 1 ou 2, **caractérisé en ce que** la manette (18) comporte au moins une branche (29) longitudinale dont une extrémité inférieure est fixée à l'axe et qui, en position de repos des moyens de commande, s'étend sensiblement parallèlement à l'axe longitudinal du corps de robinet.

4. Robinet suivant la revendication 3, **caractérisé en ce qu'**une barrette (28) transversale fait saillie latéralement de l'extrémité de la au moins une branche (29) longitudinale à distance de l'axe, la barrette transversale s'étendant, en position de repos des moyens de commande, au dessus du sommet (50, 51) du corps de robinet, notamment parallèlement à l'axe (19).

5. Robinet suivant la revendication 4, **caractérisé en ce que** la distance entre la barrette (28) transversale et la surface (50, 51) de sommet du corps de robinet est sensiblement nulle, mais cependant juste suffisante pour permettre, lors de la rotation de la manette dans un sens et dans l'autre, à la barrette transversale de passer au delà de la périphérie de la surface supérieure du corps de robinet.

6. Robinet suivant l'une des revendications 4 ou 5, **caractérisé en ce que** la surface (50, 51) supérieure du corps de robinet comporte une zone (50) avant inclinée vers le bas et une zone (51) arrière inclinée vers le bas, pour ainsi permettre la rotation de la barrette transversale sans qu'elle ne tape contre ladite surface supérieure.

7. Robinet suivant la revendication 4, 5 ou 6, **caractérisé en ce qu'**il est prévu deux branches (29) longitudinales diamétralement opposées, la barrette (28) transversale s'étendant d'une branche longitudinale à l'autre, et l'axe étant fixé à chaque extrémité à une branche longitudinale respective.

8. Robinet suivant l'une des revendications 1 à 7, **caractérisé en ce que** la section transversale de l'axe (19) est de forme non circulaire, notamment carrée, et l'axe est solidaire en rotation d'un élément (27) formant plaque, notamment l'axe étant reçu dans un élément (31) tubulaire de section non circulaire, notamment carrée, complémentaire issu de la plaque, la rotation de la manette entraînant la rotation de la plaque, qui pousse alors vers le bas un bouton (6) poussoir qui pousse l'obturateur (42) de la vanne temporisée hors de son siège.

9. Robinet suivant la revendication 8, **caractérisé en ce que** l'élément formant plaque comporte une came (30), l'agencement étant tel que lors de la rotation de la manette (18), la came (30) pivote jusqu'à buter contre la paroi intérieure du robinet ou contre des moyens (A ; B) de butée issus de la paroi intérieure du corps de robinet, dans un sens et dans l'autre.

10. Robinet suivant l'une des revendications 1 à 9, **caractérisé en ce que** l'agencement est tel que la rotation de la manette dans un sens entraîne une première temporisation avec un premier intervalle de temps de temporisation et la rotation dans le sens inverse entraîne une deuxième temporisation avec un deuxième intervalle de temps de temporisation, différent du premier intervalle.

11. Robinet suivant la revendication 10, **caractérisé en ce qu'**il est prévu des moyens (A, B) formant butée disposés de manière à limiter plus l'amplitude de rotation de la manette dans l'une des sens de rotation par rapport à l'autre sens.

12. Robinet suivant l'une des revendications précédentes, **caractérisé en ce que** le corps de robinet est sensiblement cylindrique.

13. Robinet suivant l'une des revendications précédentes, **caractérisé en ce que** la surface supérieure (51) du sommet du corps de robinet a, en section transversale perpendiculairement à l'axe (19), une forme incurvée, notamment en arc de cercle.

14. Assemblage formant lavabo, comportant un robinet suivant l'une des revendications 1 à 13 et une vasque de lavabo, le robinet étant agencé de manière que l'orifice de sortie se trouve au dessus de la vasque, en étant à distance suffisante pour permettre à l'utilisateur d'y positionner les mains pour pouvoir les mouiller.

15. Assemblage formant douche, comportant un robinet suivant l'une des revendications 1 à 13 et une zone de réception et d'évacuation de l'eau, le robinet étant agencé de manière que l'orifice de sortie se trouve au dessus de la zone de réception, en étant à distance suffisante pour permettre à l'utilisateur de s'y placer pour se mouiller le corps.

## Patentansprüche

1. Getaktete Armatur, bestehend aus einem Armaturkörper (1), umfassend eine Wassereinlassöffnung (3), insbesondere im unteren Teil, und eine Wasserauslassöffnung (2), insbesondere im oberen Teil, Mittel, die zwischen den Einlass- und Auslassöffnungen einen Wasserkreislauf bilden, und Mittel, die ein getaktetes Ventil (4) bilden und im Wasserkreislauf angeordnet und durch Öffnungssteuermittel gesteuert sind, wobei die Betätigung der Öffnungssteuermittel durch einen Benutzer die Abgabe von Wasser während eines endlichen Zeitintervalls bewirkt, wobei die Steuermittel einen Griff (18) umfassen, der in Bezug auf den Armaturkörper in Bezug auf eine Querachse (19), insbesondere eine horizontale Querachse, drehbar montiert ist, wobei die Querachse in Bezug auf die Oberseite (50, 51) des Armaturkörpers nach unten versetzt angeordnet ist, wobei die Mittel (4), die das getaktete Ventil bilden, unterhalb der Querachse (19) angeordnet sind, **dadurch gekennzeichnet, dass** die Querachse (19) zwischen der Wasserauslassöffnung (2) und der Wassereinlassöffnung (3) angeordnet ist.

2. Armatur nach Anspruch 1, **dadurch gekennzeichnet, dass** die Querachse (19) unterhalb der Wasserauslassöffnung (2) der Armatur liegt.

3. Armatur nach Anspruch 1 oder 2, **dadurch gekennzeichnet, dass** der Griff (18) mindestens einen Längsschenkel (29) aufweist, dessen unteres Ende an der Achse befestigt ist und der sich in der Ruheposition der Steuermittel im Wesentlichen parallel zur Längsachse des Armaturkörpers erstreckt.

4. Armatur nach Anspruch 3, **dadurch gekennzeichnet, dass** eine Querstange (28) seitlich vom Ende des mindestens einen Längsschenkels (29) in einem Abstand von der Achse vorsteht, wobei sich die Querstange in der Ruheposition der Steuermittel über der Oberseite (50, 51) des Armaturkörpers, insbesondere parallel zur Achse (19), erstreckt.

5. Armatur nach Anspruch 4, **dadurch gekennzeichnet, dass** der Abstand zwischen der Querstange (28) und der Oberseite (50, 51) des Armaturkörpers im Wesentlichen null ist, jedoch gerade ausreicht, damit die Querstange bei der Drehung des Griffs in beide Richtungen über den Umfang der Oberseite des Armaturkörpers hinausgehen kann.

6. Armatur nach einem der Ansprüche 4 oder 5, **dadurch gekennzeichnet, dass** die Oberseite (50, 51) des Armaturkörpers einen nach unten geneigten vorderen Bereich (50) und einen nach unten geneigten hinteren Bereich (51) aufweist, wodurch die Drehung der Querstange ermöglicht wird, ohne dass sie gegen die Oberseite stößt.

7. Armatur nach Anspruch 4, 5 oder 6, **dadurch gekennzeichnet, dass** zwei diametral gegenüberliegende Längsschenkel (29) vorgesehen sind, wobei sich die Querstange (28) von einem Längsschenkel zum anderen erstreckt und die Achse an jedem Ende an einem jeweiligen Längsschenkel befestigt ist.

8. Armatur nach einem der Ansprüche 1 bis 7, **dadurch gekennzeichnet, dass** der Querschnitt der Achse (19) unrund, insbesondere quadratisch, ist und die Achse drehbar an einem Plattenelement (27) befestigt ist, insbesondere die Achse, die in einem Rohrelement (31) mit unrundem Querschnitt, insbesondere quadratischem Querschnitt, komplementär zur Platte aufgenommen ist, wobei die Drehung des Griffs die Drehung der Platte bewirkt, die dann einen Druckknopf (6) nach unten drückt, der den Stopfen (42) der getakteten Armatur von seinem Sitz drückt.

9. Armatur nach Anspruch 8, **dadurch gekennzeichnet, dass** das Plattenelement einen Nocken (30) aufweist, wobei die Anordnung derart ist, dass der Nocken (30) bei Drehung des Hebels (18) bis zum Anschlag gegen die Innenwand der Armatur oder gegen Anschlagmittel (A; B) aus der Innenwand des Armaturkörpers in beide Richtungen schwenkt.

10. Armatur nach einem der Ansprüche 1 bis 9, **dadurch gekennzeichnet, dass** die Anordnung derart ist, dass die Drehung des Griffs,in eine Richtung zu einer ersten Taktung mit einem ersten Taktungsintervall und die Drehung in die entgegengesetzte Richtung zu einer zweiten Taktung mit einem zweiten Taktungsintervall führt, das sich vom ersten Intervall unterscheidet.

11. Armatur nach Anspruch 10, **dadurch gekennzeichnet, dass** Anschlagmittel (A, B) vorgesehen sind, die so angeordnet sind, dass sie die Amplitude der Drehung des Griffs in einer der Drehrichtungen gegenüber der anderen Richtung weiter begrenzen.

12. Armatur nach einem der vorstehenden Ansprüche, **dadurch gekennzeichnet, dass** der Armaturkörper im Wesentlichen zylindrisch ist.

13. Armatur nach einem der vorstehenden Ansprüche, **dadurch gekennzeichnet, dass** die Oberseite (51) des Armaturkörpers im Querschnitt senkrecht zur Achse (19) eine gekrümmte Form, insbesondere eine bogenkreisförmige Form aufweist.

14. Beckenanordnung, umfassend eine Armatur nach einem der Ansprüche 1 bis 13 und ein Waschbecken, wobei die Armatur so angeordnet ist, dass die Auslassöffnung über dem Becken in einem ausreichenden Abstand angeordnet ist, damit der Benutzer seine Hände dort positionieren kann, um sie benetzen zu können.

15. Duschanordnung, umfassend eine Armatur nach einem der Ansprüche 1 bis 13 und einen Wasseraufnahme- und Auslassbereich, wobei die Armatur so angeordnet ist, dass sich die Auslassöffnung oberhalb des Aufnahmebereichs in einem ausreichenden Abstand befindet, so dass der Benutzer sich dort positionieren kann, um seinen Körper zu benetzen.

## Claims

1. Time delay tap, consisting of a tap body (1), comprising a water inlet orifice (3), in particular at the bottom, and a water outlet orifice (2), in particular at the top, the parts forming a path for water between the input and output orifices, and parts forming a time delay valve (4) positioned in the water path and controlled by means for demanding opening, activation by a user of the means for demanding opening causing water to flow for a finite time interval, means of control comprising a handle (18) that rotates with respect to the valve body about a transverse shaft (19), in particular horizontal, the transverse shaft being offset towards the bottom part with respect to the top (50, 51) of the valve body, the parts (4) forming the time delay valve being located below the transverse shaft (19), **characterised in that** the transverse shaft (19) lies between the outlet orifice (2) and the inlet orifice (3).

2. Tap according to claim 1, **characterised in that**, the transverse shaft (19) is below the outlet orifice (2) of the tap.

3. Tap according to claim 1 or 2, **characterised in that** the handle (18) comprises at least one longitudinal arm (29) the lower end of which is fixed to the shaft and which, in the rest position of the control handle, extends essentially parallel to the longitudinal shaft of the tap body.

4. Tap according to claim 3, **characterised in that** a transverse bar (28) projects laterally from the end of the at least one longitudinal arm (29) at a distance from the shaft, the transverse bar extending, in the rest position of the control handle, above the top (50, 51) of the tap body, in particular parallel to the shaft (19).

5. Tap according to claim 4, **characterised in that** the distance between the transverse bar (28) and the upper surface (50, 51) of the tap body is essentially zero, but however just sufficient, when turning the handle in one direction or the other, to permit the transverse bar to pass beyond the edge of the upper surface of the tap body.

6. Tap according one of claims 4 or 5, **characterised in that** the upper surface (50, 51) of the tap body comprises a front area (50) inclined downwards and a rear area (51) inclined downwards, thereby permitting the transverse bar to rotate without it touching the upper surface.

7. Tap according to claim 4, 5 or 6, **characterised in that** it is provided with two diametrically opposed longitudinal arms (29), a transverse bar (28) extending from one longitudinal arm to the other, the shaft being fixed at each end to a respective longitudinal arm.

8. Tap according to one of claims 1 to 7, **characterised in that** the transverse section of the shaft (19) is of non-circular shape, in particular square, and the shaft is prevented from turning by a part (27) forming a plate, in particular the shaft being retained in an additional tubular part (31) of non-circular cross section, in particular square, projecting from the plate, rotation of the handle causing the plate to rotate, which then pushes a plunger (6) downwards which pushes the shutter (42) of the time delay valve off its seat.

9. Tap according to claim 8, **characterised in that** the part forming the plate includes a cam (30), the action being such that on rotation of the handle (18), the cam (30) pivots until it touches the inner wall of the valve or against the stops (A; B) projecting from the inner wall of the tap body, in one direction and the other.

10. Tap according to one of claims 1 to 9, **characterised in that** the arrangement is such that turning the handle in one direction causes a first a first time delay with a first time delay interval and turning the handle in the opposite direction causes a second time delay with a second time delay interval, different from the first interval.

11. Tap according to claim 10, **characterised in that** it is provided with stops (A, B) arranged to further limit the degree of rotation of the handle in one direction of rotation with respect to the other direction.

12. Tap according to one of the preceding claims, **characterised in that** the tap body is essentially cylindrical.

13. Tap according to one of the preceding claims, **characterised in that** the upper surface (51) of the top of the tap body has, in transverse cross section perpendicular to the shaft (19), a curved shape, in particular an arc of a circle.

14. Assembly forming a washbasin, comprising a tap according to one of claims 1 to 13 and a sink, the tap being actuated so that the output orifice is above the sink, at a sufficient distance to permit the user to place his hands so that he can wet them.

15. Assembly forming a shower, including a tap according to one of claims 1 to 13 and an area for receiving and draining the water, the tap being located so that the outlet orifice is located above the receiving area, at a sufficient distance to permit the user to stand there to wet his body.
